# EUROPEAN PATENT SPECIFICATION

(11) **EP 2 171 820 B1**
(45) Date of publication and mention of the grant of the patent: **02.07.2014**
(21) Application number: 08705007.6
(22) Date of filing: 30.01.2008
(51) Int. Cl.: H02H 3/33, H02H 3/06

(54) **EARTH LEAKAGE CIRCUIT BREAKER WITH FUNCTION FOR DETECTING REVERSE LEAKAGE CURRENT**
FRÜHLECK-UNTERBRECHERSCHALTER MIT EINER FUNKTION ZUR DETEKTION EINES RÜCKWÄRTSLECKSTROMS
DISJONCTEUR À COURANT DE FUITE À LA MASSE AVEC FONCTION DE DÉTECTION D'UN COURANT DE FUITE INVERSE

(30) Priority: 23.07.2007 KR 20070073201
(43) Date of publication of application: 07.04.2010
(73) Proprietor: Lee, Han Sik, Gwangjin-gu Seoul 143-200 (KR)
(72) Inventor: CHA, Gi Man, Seoul 153-030 (KR)
(74) Representative: Isarpatent
(86) International application number: PCT/KR2008/000557
(87) International publication number: WO 2009/014293

(56) References cited:
- EP-A2- 1 744 428
- JP-A- 09 312 126
- KR-A- 20020 070 240
- KR-U- 900 016 252
- US-A1- 2007 076 337

## Description

### Technical Field

The present invention relates to an earth leakage circuit breaker (ELCB), and more particularly, to an ELCB with a function for detecting a reverse leakage current which backflows while cutting off an electric leakage.

### Background Art

An electric leakage is a phenomenon that an electric current flows into a ground through a conductor when a cover of an electric wire or an insulator of an electrical product get deteriorated or mechanically damaged. An electric leakage means that a leakage current occurs to cause a fire, leading to victims. In order to prevent human and material damage caused by such electric leakage, an ELCB is usually installed in places where electrical products are used such as a factory or a home. A typical ELCB operates such that electrical power supplied to an electrical product is forcibly cut off when an electric leakage or an overload occurs.

After an electric leakage state is released, a circuit breaker s lever should be manually reset to an original position. However, in case where electrical power is cut off due to an electric leakage in a place where a person is not easy to approach like a wireless communication repeater, a person is necessary who can make a breaker lever to be reset for electrical power to be supplied again. For the foregoing reason, there is a problem in that electrical power is not supplied for a long time from a time when an electric leakage is released to a time when a circuit breaker is manually reset.

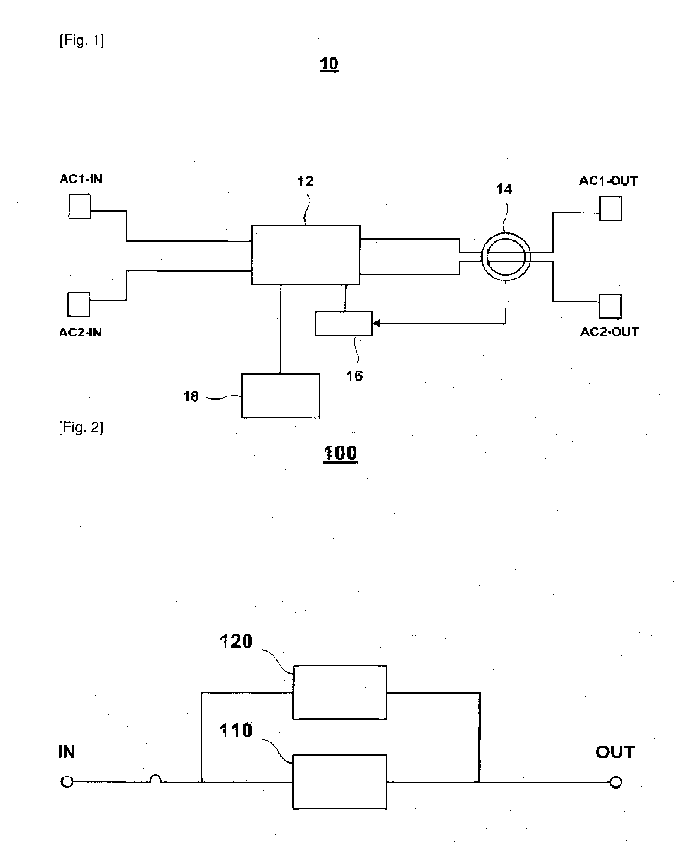

FIG. 1 is a block diagram illustrating a conventional ELCB in which a breaker lever is automatically-resettable after electrical power is cut off due to an electric leakage. The ELCB 10 comprises a power switch unit 12 including a breaker switch, an electric leakage sensing unit 14 for comparing a phase difference between both end voltages AC1-IN and AC2-IN to detect an electric leakage state, and a breaker driving unit 16 for driving the breaker switch to an OFF state. The ELCB 10 further comprises a reset driving unit 18 electrically connected to the power switch unit 12. The reset driving unit 18 serves to forcibly make the breaker switch to be reset to an ON state in order to supply electrical power again.

However, the conventional ELCB 10 has a problem in that its practicality is lowered since its external form structure becomes greatly different from a universal one due to the reset driving unit 18. In order to resolve such a problem, Korean Patent No. 0718530, which was filed on April 29, 2006 in Korea and issued on May 9, 2007 to an to an applicant of the present invention, discloses an earth leakage circuit breaker with an automatic reset means in which a structure change of a universal circuit breaker is minimized.

Nevertheless, the conventional automatic resettable ELCB supplies electrical power again by using a forcible resetting method after electrical power is cut off and, so it is not efficient. As a time increases, the number of forcible reset times reaches tens of times to hundreds of times, and this gives a mechanical burden to the ELCB, reducing the lifespan of the ELCB.

In order to resolve the above problem, Korean Utility Model No. 0312397 discloses an automatic resettable ELCB which continuously supplies a small current to a load side using a condenser to detect an electric leakage state. However, an amount of current supplied by the condenser is extremely restrictive, and there is a limitation to putting it to practical use, and its reliability is not high since an electric leakage state is determined using a small amount of current.

EP 1 744 428 discloses an electrical apparatus to be associated with a safety device suitable to be closed/opened to connect/disconnect an electrical circuit to/from a power network, respectively. The apparatus comprises a reset device to be connected to the power network for automatically closing the safety device and a control device supplied by said power network by means of the reset apparatus and connected to the electrical circuit to detect an operative state thereof and control the reset apparatus to close. The apparatus is further provided with sectioning means to be activated during a manual opening of the safety device to be switched from a closed to an opened configuration in which the reset device and the control device are connected/disconnected to/from the power network, respectively.

U.S. 2007/076337 discloses a circuit interrupting device, preferably a ground fault circuit interrupter (GFCI), which contains a dual-function test button having a short pole and a long pole positioned underneath the dual-function test button. When the GFCI is properly wired and powered, and preferably in a reset state, a first-level depression of the dual-function test button allows the short pole to close a flexible switch (KT) to electrically connect a power input end to a power output end and generate a leakage current to test the components of the GFCI. If all of the components are functioned properly, the GFCI can be reset. If not, the GFCI cannot be reset. When the GFCI is miswired or reverse wired and not powered, the first-level depression of the dual-function test button does not test the components of the GFCI.

### Disclosure of Invention Technical Problem

It is an object of the present invention to provide an ELCB which is automatically reset after an electric leakage state is released.

### Technical Solution

One aspect of the present invention provides an earth leakage circuit breaker (ELCB), comprising: a breaker portion which is configured to cut off, if an occurrence of a leakage current from an output terminal to an input terminal is detected, electrical power between the input terminal and the output terminal; the earth leakage circuit breaker (ELCB) characterized in that it further comprises: a leakage current detecting portion electrically connected in parallel with the breaker portion between the input terminal and the output terminal of the breaker portion so as to detect the leakage current which backflows from the output terminal to the input terminal even after the electrical power is cut off by the breaker portion; and an electric leakage control portion for controlling an operation of the breaker portion according to the leakage current detected by the electric leakage signal detecting portion.

The ELCB further comprises an electric leakage signal generating portion electrically connected to the leakage current detecting portion and generating an electric leakage signal by using the leakage current detected by the leakage current detecting portion; and an electric leakage control portion for controlling an operation of the breaker portion by using the electric leakage signal generated by the electric leakage signal generating portion.

The leakage current detecting portion comprises a light-emitting diode for generating light using an electric current; and a first resistor electrically connected serially to the light-emitting diode.

The leakage current detecting portion further comprises a second resistor electrically connected in parallel with the light-emitting diode.

The electric leakage signal generating portion comprises a first transistor electrically connected to the light-emitting diode and being turned on by light generated by the light-emitting diode; and a third resistor electrically connected serially to the first transistor.

The electric leakage control portion comprises an automatic reset unit electrically connected to the breaker portion and releasing a breaking state of the breaker portion; and a controller electrically connected between the electric leakage signal generating portion and the automatic reset unit and controlling an operation of the automatic reset unit according to the electric leakage signal generated by the electric leakage signal generating portion.

The ELCB further comprises a test portion serially connected between the electric leakage control portion and the leakage current detecting portion to be operated by the electric leakage control portion and operating the leakage current detecting portion according to a previously set period.

### Brief Description of the Drawings

FIG. 1 is a block diagram illustrating a conventional ELCB in which a breaker lever is automatically resettable after electrical power is cut off due to an electric leakage;
FIG. 2 is a block diagram illustrating an ELCB with a function for detecting a reverse leakage current which backflows while cutting off an electric leakage according to one exemplary embodiment of the present invention;
FIG. 3 is a circuit diagram illustrating the ELCB of FIG. 2;
FIG. 4 is a block diagram illustrating an ELCB with a function for detecting a reverse leakage current which backflows while cutting off an electric leakage according to another exemplary embodiment of the present invention; and
FIG. 5 is a circuit diagram illustrating the ELCB of FIG. 4.

### Best Mode for Carrying Out the Invention

Hereinafter, exemplary embodiments of the present invention will be described in detail. However, the present invention is not limited to the exemplary embodiments disclosed below, but can be implemented in various types. Therefore, the present exemplary embodiments are provided for complete disclosure of the present invention and to fully inform the scope of the present invention to those ordinarily skilled in the art.

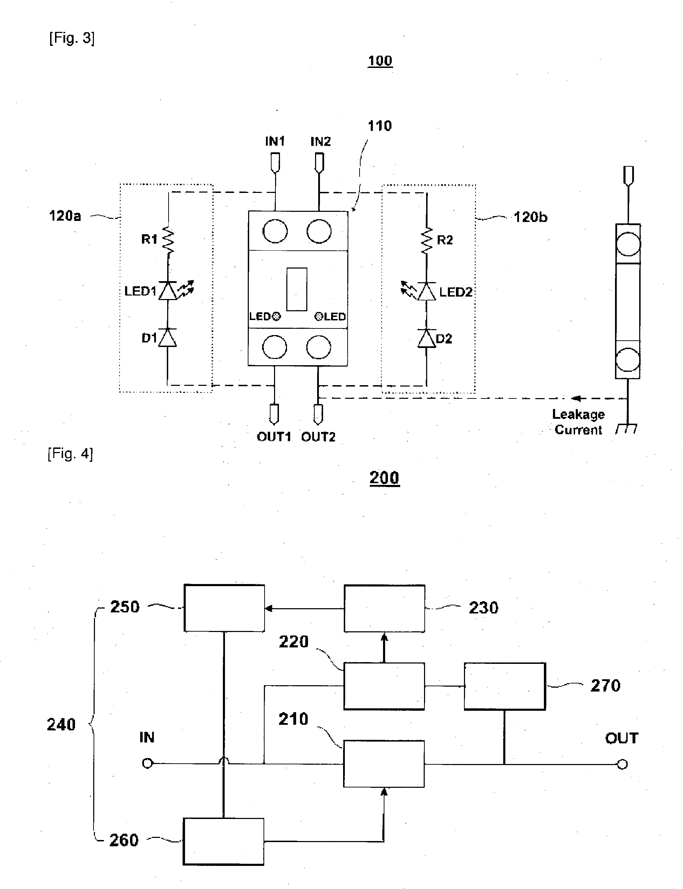

FIG. 2 is a block diagram illustrating an ELCB with a function for detecting a reverse leakage current which backflows while cutting off an electric leakage according to one exemplary embodiment of the present invention, and FIG. 3 is a circuit diagram illustrating the ELCB of FIG. 2.

Referring to FIGs. 2 and 3, the ELCB 100 comprises a breaker portion 110 for detecting an occurrence of an electric leakage to cut off electrical power, and a leakage current detecting portion 120 (120a or 120b) for detecting a leakage current which backflows after electrical power is cut off by the breaking portion 110.

Even though not shown, the breaker portion 110 may comprise a power switching unit, an electric leakage sensing unit, an electric leakage signal amplifying unit, and a breaker driving unit as elements for performing a function of a typical ELCB. The power switching unit, the electric leakage sensing unit, and the breaker driving unit are similar to those of the ELCB FIG. 1, and thus descriptions on those are omitted.

The leakage current detecting portion 120 (120a or 120b) is arranged to be electrically connected in parallel with the breaker portion 110 between an input terminal IN (IN1 or IN2) and an output terminal OUT (OUT1 or OUT2) which are installed on both ends of the breaker portion 110. When an electric leakage occurs, an electric current does not flow in the breaker portion 110, and so an electric current (leakage current) which backflows to the ELCB 100 through a ground from an external portion flows through the leakage current detecting portion 120 (120a or 120b) connected in parallel with the breaker portion 110.

The leakage current detecting portion 120 (120a or 120b) may comprise a light-emitting member LED1 or LED2 for generating light using an electric current and a first resistor (R1 and R2). Preferably, a light-emitting diode which generates light of high brightness using a small amount of current is used as a light-emitting member. A leakage current detected by the leakage current detecting portion 120 (120a or 120b) can be easily recognized by the naked eye by the light-emitting member LED1 or LED2.

The first resistors R1 and R2 are current-limiting resistors for adjusting an electric current value for generating an electric current enough to have the light-emitting members LED1 and LED2 to emit light, respectively. Meanwhile, rectifier diodes D1 and D2 may be arranged which are connected in serial to the light-emitting members LED1 and LED2 to rectify an AC power of the ELCB 100 into a DC power and to prevent a reverse current.

As described above, the ELCB 100 of the present invention uses a leakage current which backflows to the load side of the breaker portion through a ground when an electric leakage occurs.

That is, the leakage current detecting portion 120 (120a or 120b) can detect a leakage current in an electric current state that an electric leakage occurs or can not detect a leakage current in a normal state that an electric leakage state is released. Therefore, it is possible to determine whether an electric leakage occurs or not according to an operation of the leakage current detecting portion 120 (120a or 120b).

Meanwhile, in case where a switch of the breaker portion 110 is switched to an OFF state by a user manipulation, the light-emitting members LED1 and LED2 do not emit light since a leakage current is not detected by the leakage current detecting portion 120. Therefore, there is an advantage in that it is possible to easily recognize that other reasons than an electric leakage and a forcible breaking have the breaker portion 110 to go to a switch OFF state.

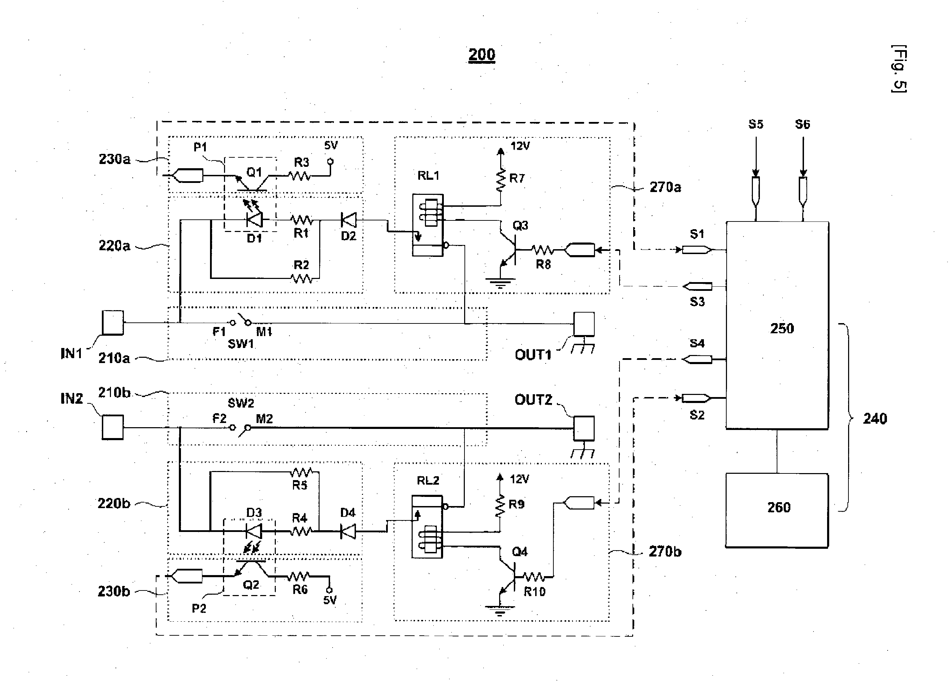

FIG. 4 is a block diagram illustrating an ELCB with a function for detecting a reverse leakage current which backflows while cutting off an electric leakage according to another exemplary embodiment of the present invention, and FIG. 5 is a circuit diagram illustrating the ELCB of FIG. 4.

Referring to FIGs. 4 and 5, the ELCB 200 comprises a breaker portion 210 (210a or 210b), a leakage current detecting portion 220 (220a or 220b), an electric leakage signal generating portion 230 (230a or 230b) for generating an electric leakage signal, and an electric leakage control portion 240 for controlling an operation of the breaker portion 210 (210a or 210b) by using the electric leakage signal.

The breaker portion 210 (210a or 210b) may comprise a switch unit SW1 or SW2 having a fixed contact terminal F1 or F2 and a movable contact terminal M1 or M2, a power switch unit (not shown), an electric leakage sensing unit (not shown), and a breaker driving unit (not shown). The breaker portion 210 is similar to that of FIG. 1, and thus a detailed description on that is omitted.

The leakage current detecting portion 220 (220a or 220b) is electrically connected in parallel with the breaker portion 210 (210a or 220b) between an input terminal IN1 or IN2 and an output terminal OUT1 or OUT2 which are installed on both ends of the breaker portion 210 (210a or 210b). Therefore, a leakage current which backflows to a load side of the breaker portion when an electric leakage occurs flows to the leakage current detecting portion 220 (220a or 220b) electrically connected in parallel with the breaker portion 210 (210a or 220b).

The leakage current detecting portion 220 (220a or 220b) may comprise a light-emitting diode D1 or D3 for generating light using an electric current, a first resistor R1 or R4 connected serially to the light-emitting diode D1 or D3, and a second resistor R2 or R5 connected in parallel with the light-emitting diode D1 or D3.

Preferably, a diode with high light-emitting efficiency or high speed is used as the light-emitting diode D1 or D3 to constitute a photo coupler P1 or P2. The first resistor R1 or R4 and the second resistor R2 or R5 perform a function for having part of a leakage current which backflows to a load side to flow to the light-emitting diode D1 or D3 and thus to be used in generating light by the light-emitting diode D1 or D3.

Resistance values of the first resistor R1 or R4 and the second resistor R2 or R5 may depend on an electric leakage sensitivity and an amplitude of an applied voltage of the breaker portion 210 (210a or 210b). For example, if an electric leakage sensitivity set to the ELCB 200 is 30mA, the resistance values of the first resistor R1 or R4 and the second resistor R2 or R5 are set so that an electric current which flows to the light-emitting diode D1 or D3 can be about 5mA to 15mA. In other words, the second resistor R2 or R5 serves as an electric leakage sensitivity adjusting resistor for adjusting an electric leakage sensitivity of the ELCB 200.

In some cases, the first resistor R1 or R4 may be a resistor of an electrical wire itself, and the second resistor R2 or R5 may be a current limiting variable resistor. The leakage current detecting portion 220 (220a or 220b) may further comprise a rectifier diode D2 or D4 which is connected serially to the light-light emitting member LED and the first resistor R1 or R4 to rectify an AC power to a DC power and to prevent a reverse current.

Returning to FIGs. 4 and 5, the electric leakage signal generating 230 (230a or 230b) is electrically connected to the leakage current detecting portion 220 (220a or 220b) so that it can generate an electric leakage signal by using a leakage current detected by the leakage current detecting portion 220 (220a or 220b). The electric leakage control portion 240 which controls an operation of the breaker portion 210 (210a or 210b) by using the electric leakage signal is arranged between the electric leakage signal generating portion 230 (230a or 230b) and the breaker portion 210 (210a or 210b). Therefore, it is possible to easily control a switching operation of the breaker 210 (210a or 210b) by using a leakage current detected by the leakage current detecting portion 220 (220a or 220b).

The electric leakage signal generating portion 230 (230a or 230b) may comprise a first transistor Q1 or Q2 which is formed integrally with the light-emitting diode D1 or D3 to receive light generated in the light-emitting diode D1 or D3, a third resistor R3 or R6 connected serially to the first transistor Q1 or Q2, and a DC power terminal.

The first transistor Q1 or Q2 is turned on or off according to whether light generated in the light-emitting diode D1 or D3 exists or not, that is, whether a leakage current occurs or not. As the third resistor R3 or R6, a resistor which allows an appropriate current to flow to the first transistor Q1 or Q2 is used.

Since the leakage current detecting portion uses an AC power and the electric leakage signal generating portion uses a DC power, it is possible to form a photo coupler P1 or P2 to generate an electric leakage signal S1 or S2 from a leakage current.

The electric leakage control portion 240 may perform a driving operation for releasing a breaking state of the breaker portion 210 (210a or 210b) through an automatic reset unit 260 connected to the breaker portion 210 (210a or 210b). The automatic reset unit 260 can employ various driving methods, and the present invention is not limited to a certain driving method. For example, there are an electromagnetic driving method and a motor driving method as the driving method of the automatic reset unit 260, and an automatic reset method disclosed in Korean Patent no. 0718530 may be used.

A driving operation of the automatic reset unit 260 may be controlled by a controller 250 connected between the electric leakage signal generating portion 230 (230a or 230b) and the automatic reset unit 260. A four (4)-bit micro controller unit (MCU) or a processor such as a central processing unit (CPU) may be used as the controller 250.

The controller 250 operates as follows. When an electric leakage occurs, the electric leakage signal S1 or S2 is generated by the electric leakage signal generating portion 230 (230a or 230b) to then be transmitted to the controller 250. At this time, the controller 250 does not operate the automatic reset unit 260 while keeping detecting an electric leakage state. On the other hand, when the electric leakage signal S1 or S2 is no longer input to the controller 250, the controller 250 determines it as an electric leakage finishing state and operates the automatic reset unit 260 to release the electric leakage breaking state.

A test portion 270 (270a or 270b) may be arranged between the electric leakage control portion 240 and the leakage current detecting portion 220 (220a or 220b). The test portion 270 (270a or 270b) operates the leakage current detecting portion 220 (220a or 220b) by being turned on or off by the electric leakage control portion 240.

The test portion 270 (270a or 270b) may comprise a fourth resistor R7 or R9, a switching means RL1 or RL2 such as a relay, a second transistor Q3 or Q4, and a fifth resistor R8 or R10. The electric leakage control portion 240 alternately generate test signals S3 and S4 at a previously set period or at a desired time to enable a detecting operation of the leakage current detecting portion 220 (220a or 220b) to thus adjust a load applied to the leakage current detecting portion 220 (220a or 220b) to a desired level.

Reference numerals S5 and S6 of FIG. 5 applied to the controller 250 denote an electric leakage detecting signal and an output power signal, respectively. Even though not shown in FIG. 5, the electric leakage detecting signal S5 is generated by the breaker portion 210 (210a or 210b), and the output power signal is generated by electrical power applied to the controller 250. The automatic reset unit 260 is electrically connected to both of the breaker portions 210a and 210b, and the electric leakage control portion 240 is electrically connected to both of the test portions 270a and 270b.

As described above, the ELCBs 100 and 200 according to the exemplary embodiments of the present invention simultaneously cut off two electrical powers applied, respectively, between a pair of input terminals and output terminals. Since a leakage current which backflows to a load side can flow to one side of a plus output terminal or a minus output terminal, it is obvious to person having ordinary skill in the art that the leakage current detecting portion, the electric leakage signal generating portion and the test portion are arranged between each input terminal and each output terminal.

As described above, the ELCB according to the present invention indicates an occurrence of a leakage current which backflows from the earth using a light-emitting means, so that it is possible to rapidly and accurately determine whether a leakage current or an electric leakage occurs or not.

When an automatic reset means is employed in the ELCB of the present invention, it is possible to determine whether an electric leakage state is released or not to reset the ELCB immediately after an electric leakage state is released. Therefore, it is possible to implement an intelligent ELCB which efficiently operates without forcibly resetting tens of times or hundreds of time to provide electrical power to a load.

## Claims

1. An earth leakage circuit breaker (ELCB), comprising:
a breaker portion (110) which is configured to cut off, if an occurrence of a leakage current from an output terminal (OUT1, OUT2) to an input terminal (IN1, IN2) is detected, electrical power between the input terminal (IN1, IN2) and the output terminal (OUT1, OUT2);
the earth leakage circuit breaker (ELCB) **characterized in that** it further comprises:
a leakage current detecting portion (220) electrically connected in parallel with the breaker portion (110) between the input terminal (IN1, IN2) and the output terminal (OUT1, OUT2) of the breaker portion (110) so as to detect the leakage current which backflows from the output terminal (OUT1, OUT2) to the input terminal (IN1, IN2) even after the electrical power is cut off by the breaker portion (110); and
an electric leakage control portion (240) for controlling an operation of the breaker portion (110) according to the leakage current detected by the electric leakage signal detecting portion.

2. The ELCB of claim 1, further comprising,
an electric leakage signal generating portion electrically connected to the leakage current detecting portion (220) and generating an electric leakage signal according to the leakage current detected by the leakage current detecting portion (220); and
wherein the electric leakage control portion (240) controls the operation of the breaker portion (110) according to the electric leakage signal generated by the electric leakage signal generating portion.

3. The ELCB of claim 1, further comprising:
a light-emitting diode for generating, if the leakage current is detected, light; and
a first resistor electrically connected serially to the light-emitting diode.

4. The ELCB of claim 3, wherein the leakage current detecting portion (220) further comprises a second resistor electrically connected in parallel with the light emitting diode.

5. The ELCB of claim 4, wherein the electric leakage signal generating portion further comprising:
a first transistor electrically connected to the light-emitting diode and being turned on by the light generated by the light-emitting diode; and
a third resistor electrically connected serially to the first transistor.

6. The ELCB of claim 2,
wherein the electric leakage control portion (240) comprises:
an automatic reset unit electrically connected to the breaker portion (110) and releasing a breaking state of the breaker portion (110); and
a controller electrically connected between the electric leakage signal generating portion and the automatic reset unit and controlling an operation of the automatic reset unit according to the electric leakage signal generated by the electric leakage signal generating portion.

7. The ELCB of claim 2, further comprising, a test portion serially connected between the electric leakage control portion (240) and the leakage current detecting portion (220) to be operated by the electric leakage control portion (240) and operating the leakage current detecting portion (220) according to a previously set period.

## Patentansprüche

1. Fehlerstromschutzschalter (FI-Schutzschalter), der Folgendes umfasst:
- einen Unterbrecherabschnitt (110), der dafür eingerichtet ist, falls das Auftreten eines Fehlerstromes von einem Ausgangsanschluss (OUT1, OUT2) zu einem Eingangsanschluss (IN1, IN2) detektiert wird, einen elektrischen Strom zwischen dem Eingangsanschluss (IN1, IN2) und dem Ausgangsanschluss (OUT1, OUT2) zu trennen;
wobei der Fehlerstromschutzschalter (FI-Schutzschalter) **dadurch gekennzeichnet ist, dass** er des Weiteren Folgendes umfasst:
- einen Fehlerstrom-Detektionsabschnitt (220), der zu dem Unterbrecherabschnitt (110) zwischen dem Eingangsanschluss (IN1, IN2) und dem Ausgangsanschluss (OUT1, OUT2) des Unterbrecherabschnitts (110) elektrisch parallel geschaltet ist, um den Fehlerstrom, der von dem Ausgangsanschluss (OUT1, OUT2) zu dem Eingangsanschluss (IN1; IN2) zurückfließt, zu detektieren, selbst nachdem der elektrische Strom durch den Unterbrecherabschnitt (110) getrennt wurde; und
- einen elektrischen Fehlersteuerabschnitt (240) zum Steuern eines Betriebes des Unterbrecherabschnitts (110) gemäß dem durch den elektrischen Fehlersignal-Detektionsabschnitt detektierten Fehlerstrom.

2. FI-Schutzschalter nach Anspruch 1, der des Weiteren Folgendes umfasst:
- einen elektrischen Fehlersignal-Generierungsabschnitt, der elektrisch mit dem Fehlerstrom-Detektionsabschnitt (220) verbunden ist und ein elektrisches Fehlersignal gemäß dem durch den Fehlerstrom-Detektionsabschnitt (220) detektierten Fehlerstrom generiert; und
- wobei der elektrische Fehlersteuerabschnitt (240) den Betrieb des Unterbrecherabschnitts (110) gemäß dem durch den elektrischen Fehlersignal-Generierungsabschnitt generierten elektrischen Fehlersignal steuert.

3. FI-Schutzschalter nach Anspruch 1, der des Weiteren Folgendes umfasst:
- eine Leuchtdiode zum Erzeugen von Licht, falls der Fehlerstrom detektiert wird; und
- einen ersten Widerstand, der mit der Leuchtdiode elektrisch in Reihe geschaltet ist.

4. FI-Schutzschalter nach Anspruch 3, wobei der Fehlerstrom-Detektionsabschnitt (220) des Weiteren einen zweiten Widerstand umfasst, der mit der Leuchtdiode elektrisch parallel geschaltet.

5. FI-Schutzschalter nach Anspruch 4, wobei der elektrische Fehlersignal-Generierungsabschnitt des Weiteren Folgendes umfasst:
- einen ersten Transistor, der mit der Leuchtdiode elektrisch verbunden ist und durch das Licht eingeschaltet wird, das durch die Leuchtdiode erzeugt wird; und
- einen dritten Widerstand, der mit dem ersten Transistor elektrisch in Reihe geschaltet ist.

6. FI-Schutzschalter nach Anspruch 2,
wobei der elektrische Fehlersteuerabschnitt (240) Folgendes umfasst:
- eine automatische Rücksetzungseinheit, die mit dem Unterbrecherabschnitt (110) elektrisch verbunden ist und einen Unterbrechungszustand des Unterbrecherabschnitts (110) aufhebt; und
- einen Controller, der zwischen dem elektrischen Fehlersignal-Generierungsabschnitt und der automatischen Rücksetzungseinheit elektrisch verbunden ist und einen Betrieb der automatischen Rücksetzungseinheit gemäß dem durch den elektrischen Fehlersignal-Generierungsabschnitt generierten elektrischen Fehlersignal steuert.

7. FI-Schutzschalter nach Anspruch 2, der des Weiteren einen Testabschnitt umfasst, der zwischen dem elektrischen Fehlersteuerabschnitt (240) und dem Fehlerstrom-Detektionsabschnitt (220) in Reihe geschaltet ist, um durch den elektrischen Fehlersteuerabschnitt (240) betrieben zu werden, und der den Fehlerstrom-Detektionsabschnitt (220) gemäß einem zuvor eingestellten Zeitraum betreibt.

## Revendications

1. Disjoncteur à courant de fuite à la terre (ELCB), comprenant :
- une partie formant disjoncteur (110) qui est configurée de façon à couper, si l'apparition d'un courant de fuite à partir d'une borne de sortie (OUT1, OUT2) vers une borne d'entrée (IN1, IN2) est détectée, l'alimentation électrique entre la borne d'entrée (IN1, IN2) et la borne de sortie (OUT1, OUT2) ;
le disjoncteur de fuite à la terre (ELCB), étant **caractérisé en ce qu'**il comprend en outre :
- une partie de détection de courant de fuite (220) reliée électriquement en parallèle à la partie formant disjoncteur (110) entre la borne d'entrée (IN1, IN2) et la borne de sortie (OUT1, OUT2) de la partie formant disjoncteur (110) de manière à détecter le courant de fuite qui reflue à partir de la borne de sortie (OUT1, OUT2) vers la borne d'entrée (IN1, IN2), même après que l'alimentation électrique a été coupée par la partie formant disjoncteur (110) ; et
- une partie de commande de fuite électrique (240) pour commander un fonctionnement de la partie formant disjoncteur (110) en fonction du courant de fuite détecté par la partie de détection de signal de fuite électrique.

2. ELCB selon la revendication 1, comprenant en outre :
- une partie de génération de signal de fuite électrique reliée électriquement à la partie de détection de courant de fuite (220) et générant un signal de fuite électrique en fonction du courant de fuite détecté par la partie de détection de courant de fuite (220) ; et
- dans lequel la partie de commande de fuite électrique (240) commande le fonctionnement de la partie formant disjoncteur (110) en fonction du signal de fuite électrique généré par la partie de génération de signal de fuite électrique.

3. ELCB selon la revendication 1, comprenant en outre :
- une diode électroluminescente pour générer, si le courant de fuite est détecté, une lumière ; et
- une première résistance reliée électriquement en série à la diode électroluminescente.

4. ELCB selon la revendication 3, dans lequel la partie de détection de courant de fuite (220) comprend en outre une deuxième résistance reliée électriquement en parallèle avec la diode électroluminescente.

5. ELCB selon la revendication 4, dans lequel la partie de génération de signal de fuite électrique comprend en outre :
- un premier transistor relié électriquement à la diode électroluminescente et étant activé par la lumière générée par la diode électroluminescente ; et
- une troisième résistance reliée électriquement en série au premier transistor.

6. ELCB selon la revendication 2,
dans lequel la partie de commande de fuite électrique (240) comprend :
- une unité de réinitialisation automatique reliée électriquement à la partie formant disjoncteur (110) et libérant un état de rupture de la partie formant disjoncteur (110) ; et
- un dispositif de commande connecté électriquement entre la partie de génération de signal de fuite électrique et l'unité de réinitialisation automatique et commandant un fonctionnement de l'unité de réinitialisation automatique en fonction du signal de fuite électrique généré par la partie de génération de signal de fuite électrique.

7. ELCB selon la revendication 2, comprenant en outre, une partie de test connectée en série entre la partie de commande de fuite électrique (240) et la partie de détection de courant de fuite (220) pour être actionnée par la partie de commande de fuite électrique (240) et actionnant la partie de détection de courant de fuite (220) selon une période préalablement définie.
